# EUROPEAN PATENT APPLICATION

(11) **EP 4 488 610 A1**
(43) Date of publication of application: **08.01.2025**
(21) Application number: 23461623.3
(22) Date of filing: 07.07.2023
(51) Int. Cl.: F28F 3/02, F28F 7/02, B33Y 80/00

(54) **HEAT EXCHANGER CORE LAYER DESIGN**

(71) Applicant: Hamilton Sundstrand Corporation, Charlotte, NC 28217 (US)
(72) Inventor: LEWANDOWSKI, Rafal Grzegorz, 51-317 Wroclaw (PL); PODGORSKI, David J., 51-317 Wroclaw (PL); SIUDZI NSKI, Hubert Jan, 51-317 Wroclaw (PL); KALUZA, Przemyslaw Stanislaw, 51-317 Wroclaw (PL)
(74) Representative: Dehns

(57) **Abstract**

A heat exchanger core layer having a first end (31), a second end (32) opposite the first end, a first side (33) extending between the first end and the second end and a second side (34), extending between the first end and the second end opposite the first side, and a divider (311) extending from the first end and extending towards the second end between the first side and the second side, wherein a first flow region (35) is formed between the first side and the divider, a second flow region (36) is defined between the divider and the second side and a turnaround region (37) is defined adjacent the second end between the first flow region and the second flow region; the layer having a plurality of first flow channels (38) in the first flow region for directing a fluid flow, in use, in a first direction from the first end to the turnaround region, and a plurality of second flow channels (39) in the second flow region for directing a fluid flow, in use, in a second direction opposite the first direction, from the turnaround region back to the first end, and wherein channels closer to the divider, in each of the first flow region and the second flow region are narrower than channels closer to the first and second sides.

## Description

### TECHNICAL FIELD

The present disclosure is concerned with a heat exchanger, specifically the design of layers of a core of a heat exchanger.

### BACKGROUND

Heat exchangers typically work by the transfer of heat between fluid flowing in parallel channels defined by metal plates of a heat exchanger core. A heat exchanger core is generally in the form of a block made up of layers of plates which define the channels through which the fluid flows. The channels are arranged such that hot fluid flows through some channels and cold fluid flows through other channels with the hot and cold channels arranged either vertically or horizontally adjacent each other such that heat is exchanged across the boundary between the channels. Thermal properties are improved by the introduction of turbulence in the flow channels and so, conventionally, a heat exchanger core comprises corrugated metal plates arranged adjacent each other so as to define flow channels for the heat exchange fluids.

Additive manufacture, or 3D printing, has recently become a preferred manufacturing method for many parts and components due to the fact that it is relatively quick and low cost and allows for great flexibility in the design of new components and parts. Due to the fact that components and parts made by additive manufacture (AM) can be quickly made in a custom designed form, as required, AM also brings benefits in that stocks of components do not need to be manufactured and stored to be available as needed. AM parts can be made of relatively light, but strong materials. As AM is becoming more popular in many industries, there is interest in manufacturing heat exchangers using AM.

In conventional heat exchanger channels, the viscous fluids that are commonly used create a thick boundary layer at the walls of the channels. This boundary layer presents a resistance to heat exchange across the channel walls and reduces the amount of energy that can be transferred through the channel wall by heat exchange. Additive manufacturing provides the opportunity to create new shapes of heat exchanger channel to address this problem.

One type of AM heat exchanger design has a so-called pin-fin design where pins are arranged to define the fluid flow channels across a layer of the core. The pins or fins extend in the flow path, between the plates, and can be shaped to improve the heat transfer and create turbulence in the fluid flow. Various pin or fin shapes are known including triangular, tear-drop or rectangular cross-sectional shapes, with or without surface features. Other forms of channel structure are also known.

In some cases, it is preferable to use a two-pass design - i.e. for each layer of the core, the fluid flows along a respective channel in one direction and is then turned around at a turnaround section of the core and flows back along a channel in the opposite direction, the fluid thus making two passes of the core. The turnaround section is often provided by a so-called turnaround tank fitted to the end of the heat exchanger core, into which fluid flows from all of the channels and layers from the first pass section of the core. The turnaround section is shaped and may be provided with vanes or the like to ensure that the fluid follows the path required to change direction. More recent designs have been developed in which the turnaround section is formed integrally with the core, the turnaround section comprising fluid flow channels that fluidly connect the fluid flow channels for flow in the one direction to the fluid flow channels for flow in the opposite direction. The turnaround channels are therefore arranged substantially transverse to the first and second direction flow channels and turn the direction of fluid flow by substantially 90 degrees from the first direction and then a further 90 degrees to the second direction. Vanes may be provided at the turns to assist in guiding the fluid into and out of the turnaround section.

In such a design, with an integral turnaround section, fluid is provided to a first set of fluid flow channels at a first end of the core (to each core layer) at a fluid inlet. The inlet may be connected to a manifold connected to the fluid source, in use. The fluid flows along a first section, defined by the first channels, in a first direction. At the second end of the layer/core the fluid exits the first channels into the turnaround channels and thus changes direction to flow across the turnaround section. The fluid direction then changes again, where the turnaround section meets a second set of fluid flow channels in a second portion, to flow in a second direction, opposite the first direction, to a fluid outlet at the first end (where a manifold and/or outlet may be provided.

In many heat exchangers, the core layers have a length dimension (i.e. the dimension in the fluid flow direction from the inlet or first end to the turnaround section at the opposite end of the layer) which is greater than the width dimension (transverse to the length dimension). In some applications, however, there is a desire for the core to have a width dimension greater than the length dimension e.g. because of space availability and/or because it is generally easier to connect an inlet/outlet or manifold to a wider end - i.e. the greater the dimension of the end to which the inlet/outlet or manifold is attached, the easier the attachment.

A problem, however, with a wider core design (i.e. width is greater than the length) is that there is then a large difference in the length of the fluid flow path from the inlet to the outlet - i.e. the flow of the fluid through the layer - between the outer portions of the core layer and the inner portions towards the middle of the layer. This aspect ratio causes uneven fluid flow through the core layer and is, therefore, unfavourable. This impacts heat exchanger performance and can cause local variations in heat transfer - i.e. zones at the outer portions where the fluid flow is slow or stagnated. The more the width of the core increases relative to its length, the greater the variability in path length across different parts of the layer.

There is, therefore, a need for a heat exchanger core layer design which reduces the impact of such an aspect ratio, so that wider heat exchangers can be used without adversely affecting fluid flow.

### SUMMARY

According to the disclosure, there is provided a heat exchanger core layer having a first end, a second end opposite the first end, a first side extending between the first end and the second end and a second side, extending between the first end and the second end opposite the first side, and a divider extending from the first end and extending towards the second end between the first side and the second side, wherein a first flow region is formed between the first side and the divider, a second flow region is defined between the divider and the second side and a turnaround region is defined adjacent the second end between the first flow region and the second flow region; the layer having a plurality of first flow channels in the first flow region for directing a fluid flow, in use, in a first direction from the first end to the turnaround region, and a plurality of second flow channels in the second flow region for directing a fluid flow, in use, in a second direction opposite the first direction, from the turnaround region back to the first end, and wherein channels closer to the divider, in each of the first flow region and the second flow region are narrower than channels closer to the first and second sides

The core channels are preferably made using additive manufacturing, although it is conceivable that other manufacturing methods may be used.

Also provided is a heat exchanger core comprising several such heat exchanger core layers, as well as a heat exchanger comprising such a heat exchanger core.

### BRIEF DESCRIPTION

Examples according to the disclosure will now be described with reference to the drawings. It should be noted that these are examples only and that variations are possible within the scope of the claims.
Figure 1A shows an example of an 'elongate' heat exchanger core layer.
Figure 1B shows an example of a 'wider' heat exchanger core layer
Figure 2 shows a detail of a pin-fin type heat exchanger core.
Figure 3 shows an example of a heat exchanger core layer according to this disclosure.
Figure 4 shows a close-up detail of a heat exchanger core layer such as shown in Fig. 3.

### DETAILED DESCRIPTION

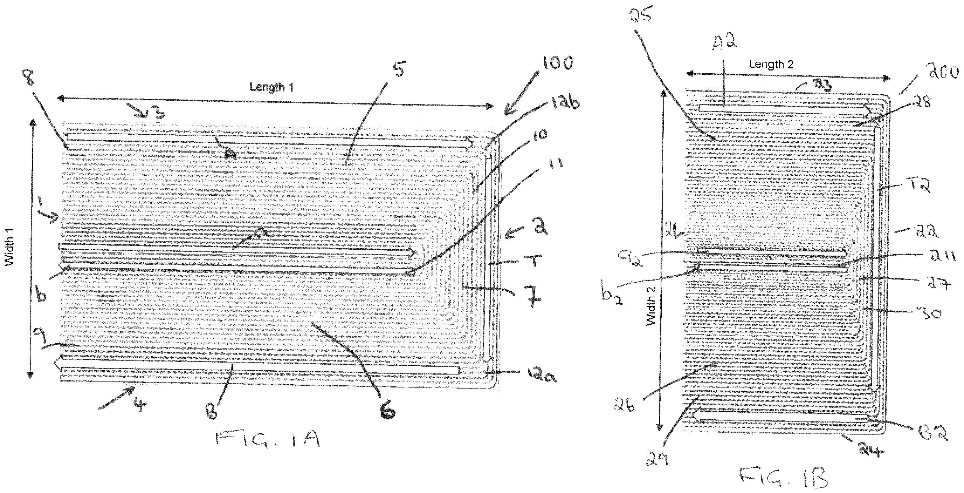

The objects of the present disclosure will first be explained, as already set out above, with reference to Figs. 1A and 1B.

Fig. 1A shows a typical heat exchanger core layer 100 having a first end 1, a second end 2 and first and second sides 3, 4 extending between the first and second ends. The layer has a first flow portion 5, a second flow portion 6, and a turnaround section 7 at the second end between the first flow portion and the second flow portion. The first and second portions 5, 6 are separated by a divider 11. The first and second ends 1, 2 define the width (Width 1) of the layer and the sides 3,4 define the length (Length 1) of the layer.

First fluid flow channels 8 extend from the first end 1, along the first portion 5 to the turnaround section 7. Second fluid flow channels 9 extend from the turnaround section 7 to the first end 1, in the second portion. Turnaround channels 10 extend across the turnaround section 7 from the first fluid flow channels to the second fluid flow channels. Turnaround vanes 12a, 12b may be provided at the transitions between the first flow channels and the turnaround channels and the turnaround channels and the second fluid flow channels.

In use, fluid is provided (from at inlet and/or manifold (not shown)) to the first portion 5 at the first end 1 and is guided by the first fluid flow channels along the first portion in the direction of arrows A, a. At the turnaround section 7, the fluid is turned to flow in a substantially transverse direction T along the turnaround channels and is then guided to flow along the second channels in the second portion, in the direction of arrows B, b back to the first end 1, to an outlet/manifold (not shown). Although the path for fluid flowing along the channels closer to the sides 3, 4 (arrows A, B) is longer than that for fluid flowing along the more inward channels (arrows a, b), there is not a significant different in the aspect ratio and fluid flow velocity is fairly uniform.

If, however, the core layer 200 has a format such as shown in Fig. 1B, where the width (first end 21, second end 22) Width 2 is greater than the length, Length 2, (sides 23, 24), fluid flowing into the first portion 25 along first fluid flow channels 28, to turnaround section 27 along turnaround channels 30, and then back along the second portion 26 via second fluid flow channels 29, the first and second portions separated by a divider 211, it can be seen that the fluid flow path for fluid flowing along the outermost channels (arrows A2, T2, B2) is significantly longer than fluid flowing along more inward channels (arrows a2, b2). This, as described above, can adversely affect fluid flow and, therefore, heat transfer properties.

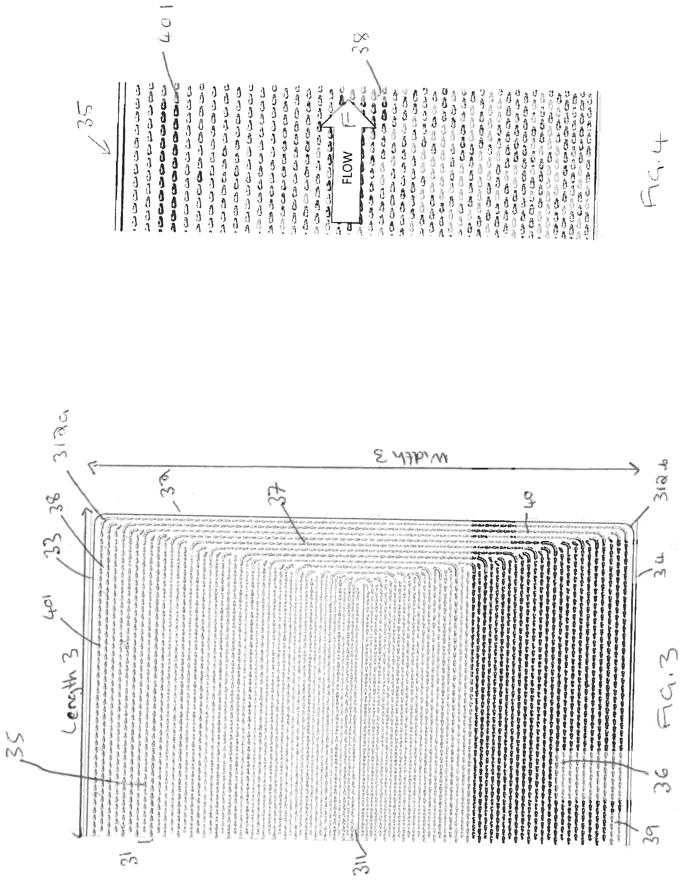

According to this disclosure, these problems are addressed by varying the widths of the fluid flow channels such that the fluid flow channels closer to the sides are wider than those closer to the middle of the layer. Put another way, the density of the channels increases towards the middle of the layer compared to the sides. This can be seen in Figs. 3 and 4.

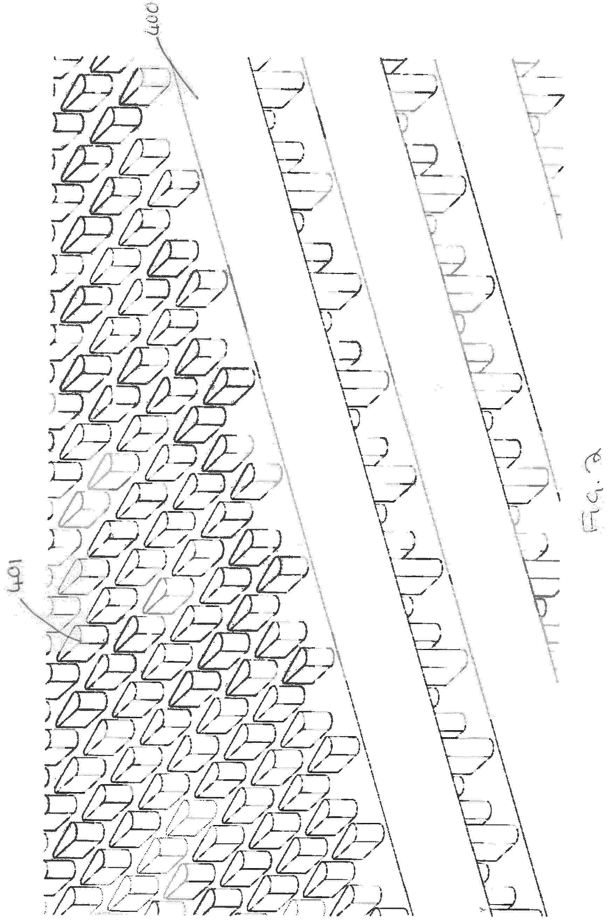

First, Fig. 2 shows an example of a pin-fin type core in which, as described above, pins 401 are arranged on core layers 400 to define the fluid flow channels.

In the examples shown, the channels are formed by pins but the concepts of this disclosure may also be applied to other channel designs and are not limited to pin-fin heat exchangers.

Figure 3 shows a core layer similar to that shown in Fig. 1B as regards the aspect ratio - i.e. the width (Width 3) defined by the first end 31 and second end 32, and the length, Length 3, is defined by the sides 33, 34. First and second portions 35, 36 are separated by a divider 311, and turnaround section 37 is provided between the first and second portions to reverse the direction of the fluid. The turnaround section may also be formed with turnaround channels between the first channels 38 in the first fluid flow region and the second fluid flow channels 39 in the second fluid flow region. Turnaround vanes 312a, 312b may also be provided. The design and operation of the heat exchanger is largely as described above in relation to Figs. 1A and 1B. The difference is that the widths (or density) of the fluid flow channels (38, 39) in the first and second portions (and optionally also the turnaround channels 40 in the turnaround section) varies across the width dimension of the layer. More specifically, the width of the channels in the first portion, closer to the first side, are greater than the width of the channels in the first portion further from the first side (i.e. closer to the divider 311). Similarly, the width of the channels in the second portion, closer to the second side, are greater than the width of the channels in the second portion further from the second side (i.e. closer to the divider 311). Put another way, the channels are more densely spaced the further away from the sides 33, 34.

Figure 4 shows this in more detail for a section of one portion 35 where it can be seen that the variation in width (or, conversely density) of the channels varies across the width dimension (i.e. transverse to the fluid flow direction F).

The result of this is that where the fluid flow path is longer from the inlet to the outlet (at first end 1) - i.e. in the outermost channels, those channels are wider and so present less resistance to the flow. This compensates for the longer flow path as regards the impact on fluid flow velocity since the fluid is able to flow faster due to the wider channels. The innermost channels are narrower (more dense) so the fluid flow velocity is less in these channels. This then has the effect of making the overall time of flow similar for all channels, regardless of their actual path length and reduces differences in pressure drop across the layer.

The channels are therefore narrower/more densely arranged where the fluid has a shorter path/lower pressure drop and would normally flow with higher velocity than the longer/higher pressure drop outer channels. The more densely arranged channels increase the pressure drop locally and encourage the fluid to take the longer path through the wider channels where, otherwise, lower velocity/stagnation might be experienced. The uniformity of fluid flow is, therefore, improved for heat exchanger designs with a higher width/length ratio.

The width of the channels can be varied by varying the spacing of the pins (in the width direction) and/or by varying the size of the pins or, in designs other than pin-fin designs, of the walls of the channels.

An advantage of improving the thermal efficiency using such a solution is that, for the same efficiency, the overall envelope of the heat exchanger can be reduced.

## Claims

1. A heat exchanger core layer having a first end (31), a second end (32) opposite the first end, a first side (33) extending between the first end and the second end and a second side (34), extending between the first end and the second end opposite the first side, and a divider (311) extending from the first end and extending towards the second end between the first side and the second side, wherein a first flow region (35) is formed between the first side and the divider, a second flow region (36) is defined between the divider and the second side and a turnaround region (37) is defined adjacent the second end between the first flow region and the second flow region; the layer having a plurality of first flow channels (38) in the first flow region for directing a fluid flow, in use, in a first direction from the first end to the turnaround region, and a plurality of second flow channels (39) in the second flow region for directing a fluid flow, in use, in a second direction opposite the first direction, from the turnaround region back to the first end, and wherein channels closer to the divider, in each of the first flow region and the second flow region are narrower than channels closer to the first and second sides.

2. A heat exchanger core layer as claimed in claim 1, further comprising a plurality of turnaround flow channels (40) in the turnaround region for directing fluid flow, in use, from the first fluid flow region to the second fluid flow region.

3. A heat exchanger core layer as claimed in claim 2, further comprising turnaround vanes (312a, 312b) providing a transition from the turnaround flow channels and the first flow channels and the second flow channels.

4. A heat exchanger core layer as claimed in any preceding claim, wherein the first and second sides are shorter than the first and second ends.

5. A heat exchanger core layer wherein the first flow channels and the second flow channels are defined by rows of pins (401).

6. A heat exchanger core layer as claimed in claim 5, wherein the pins taper from a wider end to a narrower end in the fluid flow direction.

7. A heat exchanger core layer as claimed in any preceding claim, formed by additive manufacture.

8. A heat exchanger core layer as claimed in claim 5 or any claim dependent thereon, wherein the width of the fluid flow channels is varied by varying the spacing of the pins in the direction perpendicular to the fluid flow direction.

9. A heat exchanger core layer as claimed in claim 5 or any claim dependent thereon, wherein the width of the fluid flow channels is varied by varying the size of the pins in the direction perpendicular to the fluid flow direction.

10. A heat exchanger core comprising a plurality of heat exchanger core layers (400) stacked together and the fluid flow channels defined therebetween.

11. A heat exchanger comprising a heat exchanger core as claimed in claim 10.
